# EUROPÄISCHE PATENTSCHRIFT

(11) **EP 0 882 210 B1**
(45) Veröffentlichungstag und Bekanntmachung des Hinweises auf die Patenterteilung: **08.08.2001**
(21) Anmeldenummer: 97952866.8
(22) Anmeldetag: 03.12.1997
(51) Int. Cl.: G01B 7/30, G01D 5/14

(54) **DREHWINKELSENSOR**
ROTATION ANGLE SENSOR
DETECTEUR D'ANGLE DE ROTATION

(30) Priorität: 04.12.1996 DE 29621018 U; 04.12.1996 DE 29621016 U; 23.01.1997 DE 29701129 U
(43) Veröffentlichungstag der Anmeldung: 09.12.1998
(73) Patentinhaber: AB Elektronik GmbH, 59368 Werne (DE)
(72) Erfinder: APEL, Peter, D-59394 Südkirchen (DE); HAUSCHOPP, Marion, D-59368 Werne (DE)
(74) Vertreter: Hoffmeister, Helmut, Dr. Dipl.-Phys.
(86) Internationale Anmeldenummer: EP9706758
(87) Internationale Veröffentlichungsnummer: WO9825102

(56) Entgegenhaltungen:
- WO-A-92/10722
- WO-A-95/14911
- DE-U- 9 408 516
- PATENT ABSTRACTS OF JAPAN vol. 18, no. 20 (E-1489), 13.Januar 1994 & JP 05 258963 A (SONY CORP), 8.Oktober 1993,

## Beschreibung

Die Erfindung betrifft einen Drehwinkelsensor, der aufweist
- eine stationäre Einheit, die ein Statorelement enthält, das in einem Gefäßelement mit wenigstens einem Bodenteil angeordnet ist,
   wobei das Statorelement aus zwei Statorteilelementen aus einem ferrittischen Material besteht, die zwischen sich eine Abstandsausnehmung freilassen und
   wobei die Statorteilemente mit wenigstens einer um 45° geneigten Phase versehen sind und
- eine rotierende Einheit, die ein ringförmig ausgebildetes Magnetelement aufweist, das in einer Magnethalterungseinheit gehalten ist,
   wobei das Magnetelement unter Belassung eines Luftspaltes um die Statorteilelemente bewegbar ist.

Ein Drehwinkelsensor der eingangs genannten Art ist aus der WO-A-9 514 911 der Anmelderin bekannt. Er besteht aus einer stationären und einer rotierenden Einheit, die gegenüber dieser bewegbar ist. Die stationäre Einheit weist zwei sich gegenüberliegende Statorteilelemente auf, die zwischen sich eine Abstandsausnehmung freilassen. Die Statorteilelemente sind aus einem Blechstapel aus einzelnen Blechen aufgebaut, die gegenüber dem Bodenteil eines Gefäßelementes mit einer Verspanneinheit gehalten werden. Die rotierende Einheit weist ein ringförmiges Magnetelement auf, das in einer Magnethalterungseinheit angeordnet ist.

Nachteilig ist, daß die aus einzelnen Blechen bestehenden Stator-Teilelemente mit hohem Aufwand zu fertigen und zu befestigen sind. Die Magnethalterungseinheit ist so aufgebaut, daß das ringförmige Magnetelement gegenüber einer Welle, an der die rotierende Einheit angeschlossen ist, magnetisch nicht isoliert ist. Das führt zu Verfälschungen der aufgenommenen Meßwerte. Nachteilig ist weiterhin, daß das Magnetelement beim Zusammensetzen des Drehwinkelsensors mit seinen gegenüberliegenden Polen nur mit hohem Aufwand gegenüber der Abstandsausnehmung zwischen den Statorteilelementen einjustiert werden kann.

Der Erfindung liegt deshalb die Aufgabe zugrunde, einen Drehwinkelsensor der eingangs genannten Art so weiter zu entwickeln, daß er einfacher und genauer gefertigt und zusammengesetzt werden kann. Insbesondere soll die stationäre Einheit einfacher gefertigt, die Magnethalterungseinheit weitestgehend magnetisch isolierend hergestellt und das ringförmige Magnetelement sicher in der Magnethalterungseinheit gehalten und gegenüber der Abstandsausnehmung zwischen den Statorteilelementen der stationären Einheit einfach und genau einjustiert werden können.

Erfindungsgemäß wird diese Aufgabe durch die Merkmale des Anspruchs 1 gelöst.

Die mit der Erfindung erzielten Vorteile bestehen insbesondere darin, daß die im Sinterverfahren hergestellten Sinter-Statorkörper maßgenau und lagegerecht geformt werden können. Ein mühsames Stapeln aus einzelnen Blechen ist nicht mehr erforderlich. Von besonderem Vorteil ist, daß jeder Sinter-Statorkörper mit dem Grundplattenelement genauestens verbunden werden kann. Die im MIM-Verfahren hergestellte Magnethalterungseinheit kann kostengünstig und insbesondere maßgenau geformt werden. Eine aufwendige, insbesondere spanabhebende Verformung des Materials entfällt. Dadurch hält die Magnethalterungseinheit das ringförmige Magnetelement nicht nur lagegenau, sondern auch meßtechnisch präzise. Hierdurch wird die Meßgenauigkeit wesentlich erhöht. Durch das Stegelement bzw. die Spaltausnehmung ist das Magnetelement gegenüber der Spaltausnehmung bei der Montage zugleich genau fixiert. Aufwendige Nachjustierungen erübrigen sich in diesem Zusammenhang. Hierbei besteht die Möglichkeit, daß die Pole des ringförmigen Magnetelements im rechten Winkel, d. h. senkrecht gegenüber der Abstandsausnehmung zwischen den beiden sich gegenüberliegenden Statorteilelementen einstellbar ist. Ist in einem speziellen Fall eine von 90° abweichende Einstellung erforderlich, kann auch diese für alle in einer Serie hergestellte Drehwinkelsensoren genau voreingestellt werden. Wesentlich ist vor allem, daß das Magnetelement verdrehungssicher gehalten wird.

Die Halteelemente können in zwei Ausführungsformen ausgebildet sein. Zum einen können sie als Sinterhaltebolzen und zum anderen als Sinterhaltefüße geformt sein. Sowohl die Sinterhaltebolzen als auch die Sinterhaltefüße enden jeweils in einer Sinterhaltekappe. Hierdurch wird gewährleistet, daß die Sinter-Statorkörper unverrückbar in dem Grundplattenelement gehalten werden.

Das erste Grundplattenelement kann eine Statorgrundplatte mit wenigstens einer Halteausnehmung sein.

Die Statorgrundplatte kann auf zweierlei Art und Weise ausgebildet sein.

Zum einen ist eine erste Statorgrundplatte mit ersten Halteausnehmungen das Bodenteil des Gefäßelements der stationären Einheit.

Zum anderen ist eine zweite Statorgrundplatte eine zweite Statorgrundplatte mit einem kreisrunden Haltescheibenkörper mit wenigstens einer zweiten Halteausnehmung. Der Haltescheibenkörper ist wenigstens teilweise von einem Befestigungskörper mit wenigstens einer Befestigungsausnehmung umgeben.

Wenigstens der Haltescheibenkörper kann wenigstens teilweise vom Bodenteil des Gefäßelementes umschlossen sein.

Die zweiten Halteausnehmungen und die Befestigungsausnehmungen können rund und/oder apfelsinenscheibenförmig ausgebildet sein.

Die Statorgrundplatte kann aus Aluminium, Kupfer oder Kunststoff bestehen.

Durch die unterschiedliche Ausbildung des Grundplattenelementes können die Sinter-Statorkörper auf zweierlei Art und Weise befestigt werden.

### Befestigungsvariante 1:

Die Sinter-Haltekörper werden im Sinterverfahren maßgenau geformt. Danach werden sie lagegerecht positioniert und beim Formen des gesamten Gefäßelementes in dessen Bodenteil eingeformt. Der wesentlichste Vorteil dieser Befestigungsvariante besteht in der äußerst kostengünstigen Halterung und Fixierung der Sinter-Statorkörper. Die stationäre Einheit kann damit in nur zwei Fertigungsgrundetappen endgültig fertiggestellt werden.

### Befestigungsvariante 2:

Hierbei werden zuerst die Grundelemente der Statorkörper im Metall-Spritzguß-Verfahren aus ferritischem Material geformt. Anschließend wird in einem weiteren Metall-Spritzguß-Formungsschritt die Statorgrundplatte, insbesondere aus Aluminium, um die Statorkörper gelegt. Das so gefertigte Rohteil wird aus dem Werkzeug genommen und in einem Sinterofen eingebracht und die Sinter-Statorkörper sowie die Stator-grundplatte gesindert. Hierbei schrumpft sowohl das ferritische Material als auch das Aluminium. Im Ergebnis des Sinterprozesses werden die Sinter-Statorkörper lage- und paßgenau sehr fest in der gesinterten Statorgrundplatte gehalten. Selbst stärkste Beanspruchungen sind nicht in der Lage, die Sinter-Statorkörper aus der Statorgrundplatte herauszulösen.

Die so fertiggestellte gesinterte Baueinheit wird in ein vorgespritztes Gefäßelement eingesetzt und entsprechend befestigt. Das Befestigen kann entweder durch ein Einrasten in das Gefäßelement oder durch ein wenigstens teilweises Einspritzen gehalten werden.

Das Gefäßelement mit seinem Bodenteil kann aus einem formbaren Kunststoff, vorzugsweise einem gespritzten Kunststoff, hergestellt sein. Hierdurch wird die paßgenaue Herstellung der stationären Einheit als Teil des Drehwinkelsensors gesichert.

Der MIM-Haltekörper kann in zwei Ausführungsformen ausgebildet sein.

Bei der ersten Ausführungsform ist er ein einteiliger, aus einem magnetisch leitfähigen Material im Metal-Injektion-Molding-Verfahren hergestellter pokalförmiger MIM-Haltestielbecher, der aus
- einem im wesentlichen scheibenförmigen Fuß,
- wenigstens zwei sich an einem Rand des Fußes erhebenden, vorzugsweise zylindrisch ausgebildeten Stielen und
- einem im wesentlichen hohlzylinderförmig ausgebildeten Becherkörper, der von den Stielen gehalten ist, besteht. Die Ausbildung des MIM-Haltestielkörpers aus einem einzigen Material reduziert ganz wesentlich die Fertigungskosten. Der MIM-Haltestielkörper wird hierbei in einer einzigen Form aus dem magnetisch leitenden Material gespritzt. Anschließend wird der 30 % größere Roh-Haltestielkörper wenigstens in einem Ofen erhitzt und ausgesintert und erhält hier seine endgültige Form. Um den MIM-Haltebecher gegenüber an ihn zu montierenden Teilen magnetisch wenigstens überwiegend isolieren zu können, ist der Fuß vom Becherkörper durch die Stiele als Magneto-Isolierzone getrennt.

Bei der zweiten Ausführungsform ist der MIM-Haltekörper ein zweiteilig ausgebildeter Haltekörper, der im Zwei-Komponenten-Verfahren hergestellt werden kann. Dieser besteht aus einem scheibenförmigen Becherbodenkörper, der aus einem ersten Material, nämlich einem magnetisch nichtleitenden Material im Metal-Injektion-Molding-Verfahren geformt wird. Dieser Becherbodenkörper wird anschließend in einer anderen Form mit einem im wesentlichen hohlzylinderförmigen Becherhohlzylinderkörper aus einem zweiten Material, nämlich einem magnetisch leitenden Material umzogen. Anschließend wird der so aus beiden Materialien um 30 % größere Roh-Sinterhaltekörper in einem Ofen erhitzt und quasi ausgesintert. Der Becherbodenkörper und der Becherhohlzylinderkörper werden nicht nur innig miteinander verbunden, sondern genauestens ausgebildet. Hierdurch kann das ringförmige Magnetelement lagegenau gehalten werden. Dadurch, daß der Becherbodenkörper als Magneto-Isolierzone aus einem magnetisch nicht leitenden Material hergestellt ist, besteht eine sehr gute magnetische Isolierung bei einer Verbindung mit anderen Teilen. Von besonderem Vorteil ist, daß der Becherbodenkörper mit einer Ausnehmung versehen werden kann, in die ein Drosselklappenwellelement nur eingesteckt zu werden braucht. Hierdurch wird der höhere Fertigungsaufwand kompensiert.

Der Becherkörper und der Becherhohlzylinderkörper kann mit wenigstens einer Spaltausnehmung versehen sein. Das ringförmige Magnetelement kann dazu wenigstens ein kompatibles Stegelementen aufweisen. Hierdurch besteht die Möglichkeit, daß die Nord-Süd-Pole des ringförmigen Magnetelements im rechten Winkel, d. h. senkrecht gegenüber der Abstandsausnehmung zwischen den beiden sich gegenüberliegenden Statorteilelementen einstellbar ist. Ist, wie bereits erwähnt, in einem speziellen Fall eine von 90° abweichende Einstellung erforderlich, ist auch dieser Winkel für alle in einer Serie hergestellten Drehwinkelsensoren genau voreingestellt.

Das mit wenigstens einem Stegelement versehene ringförmige Magnetelement kann in kompatible Spaltausnehmungen des Becherhohlzylinder- oder Becherkörpers eingreifen. Hierdurch ist die verdrehungssichere Festlegung des ringförmigen Magnetelementes möglich.

Das Stegelement bzw. die Stegelemente können aus wenigstens einer der sich gegenüberliegenden Schnittstellen des aus einem Süd-Nord- und einem Nord-Süd-Halbring zusammengesetzten Magnetelements angeordnet sein. Das Stegelement ist damit an einer sowieso bestehenden Magnetfeldungleichmäßigkeitsstelle angebracht und fällt in dem vom ringförmigen Magnetelement abgegebenen Magnetfeld nicht weiter auf.

Die Stegelemente können entweder aus dem gleichen Material des Elements bzw. Einheit hergestellt werden, an dem sie angeordnet sind oder einem Kunststoff ausgebildet sein. Der Einsatz von Kunststoff kommt immer dann infrage, wenn die Festlegung des Magnetelements gegenüber der Abstandsausnehmung der Statorteilelemente vollkommen ohne Störung des Magnetfeldes vorgenommen werden soll.

Die Erfindung ist in der Zeichnung dargestellt und wird im folgenden näher beschrieben. Es zeigen
- Fig. 1: einen Drehwinkelsensor, der mit einer Drosselklappeneinheit verbunden ist, in einer schematischen, teilweise geschnittenen Darstellung,
- Fig. 2a: eine erste Ausführungsform einer stationären Einheit eines Drehwinkelsensors gemäß Fig. 1 in einer schematisch dargestellten Draufsicht,
- Fig. 2b: > einen Schnitt durch eine stationäre Einheit gemäß Fig. 2a entlang der Linie IIB - IIB,
- Fig. 3a: eine Statorgrundplatte für eine zweite Ausführungsform einer stationären Einheit eines Drehwinkelsensors gemäß Fig. 1 in einer schematisch dargestellten Draufsicht,
- Fig. 3b: einen Schnitt durch eine Statorgrundplatte gemäß Fig. 3a entlang der Linie IIIB - IIIB,
- Fig. 4a: eine zweite Ausführungsform einer stationären Einheit in einer schematischen Teildarstellung mit einer Statorgrundplatte gemäß Fig. 3a und 3b,
- Fig. 4b: einen Schnitt durch eine stationäre Einheit gemäß Fig. 4a entlang der Linie IVB - IVB,
- Fig. 5a: eine erste Ausführungsform einer Magnethalterungseinheit für eine rotierende Einheit eines Drehwinkelsensors gemäß Fig. 1,
- Fig. 5b: einen Schnitt durch eine Magnethalterungseinheit gemäß Fig. 5a entlang der Linie VB - VB,
- Fig. 5c: eine zweite Ausführungsform einer Magnethalterungseinheit für eine rotierende Einheit eines Drehwinkelsensors gemäß Fig. 1,
- Fig. 5d: einen Schnitt durch eine Magnethalterungseinheit gemäß Fig. 5c entlang der Linie VD - VD und
- Fig. 6: ein gegenüber einer Abstandsausnehmung eines Statorelements einstellbares Magnetelement eines Drehwinkelsensors gemäß Fig. 1 in einer schematisch dargestellten Draufsicht.

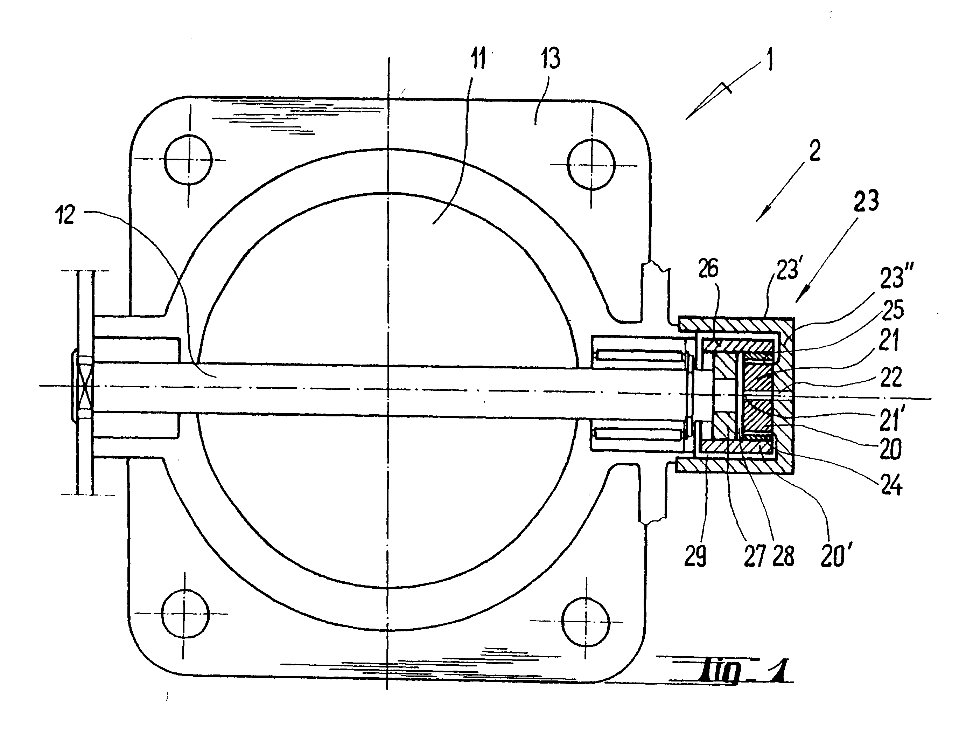

In Fig. 1 ist ein Drehwinkelsensor 2 mit einer stationären Einheit 20 dargestellt. Sie besteht aus einem in einem Gefäßelement 23 angeordneten Statorelement 21 aus zwei apfelsinenscheibenförmig ausgebildeten Statorteilelementen 21.1 und 21.2. Die Statorteilelemente 21.1 und 21.2 lassen zwischen sich eine Abstandsausnehmung 21" frei. Die Ecken der Stator-teilelemente 21.1 und 21.2 sind am Ende der Abstandsausnehmung 21" abgeschrägt, vorzugsweise in einem Winkel von 45°. Das Gehäuseelement 23 besteht aus einem Bodenteil 23", über den sich eine Zylinderwand 23' erhebt.

Gegenüber der so ausgebildeten stationären Einheit 20 ist gemäß Fig. 1 eine rotierende Einheit 20' positioniert. Die rotierende Einheit 20' weist ein Magnetelement 24 auf, das ringförmig ausgebildet ist. Es wird von einer Magnethalterungseinheit 26, 27 gehalten. Die Magnethalterungseinheit besteht aus einem Magnethalterungselement 26 und ein Distanzscheibenelement 27. Das Distanzscheibenelement 27 ist mit einem Drosselklappenwellenelement 12 direkt verbunden. Zwischen dem Distanzscheibenelement 27 und dem Statorelement 21 befindet sich, wenn das Gehäuse 23 am Drosselklappengehäuse-element 13 einer Drosselklappeneinheit 1 befestigt ist, ein Spalt 28. Zwischen der Zylinderwand 23' und dem Magnethalterungselement 26 liegt ein Spalt 29. Dadurch bilden das Magnethalterungselement 26 und das in ihm gehalte Magnetelement 24 sowie das Distanzscheibenelement eine Rotoreinheit, die sich geschützt im Inneren des Gehäuseelements 23 bewegen kann.

Sind die einzelnen Elemente der rotierenden Einheit 20' entsprechend am Drosselklappenwellenelement 12 justiert und gerichtet, wird das Gefäßelement 23 mit den Statorteilelementen 21.1 und 21.2 und einem in der Abstandsausnehmung 21" gehaltenen Hallelement 22 über das Magnethalterungselement 26 geschoben, so daß ein Luftspalt 25 und ein Spalt 28 sowie der Spalt 29 ausgebildet werden. Danach wird das Gehäuseelement 23 mit der Zylinderwand 23' am Drosselklappen-Gehäuseelement 13 befestigt. Wird die Verbindung zwischen dem Gehäuselement 23 und dem Drosselklappen-Gehäuseelement 13 abdichtend gestaltet, übernimmt das Gehäuseelement 23 nicht nur die Funktion einer Halterung, sondern insbesondere den eines äußeren Schutzmantels. Durch diese Maßnahmen ist der gesamte Drehwinkelsensor 2 gegen äußere Einflüsse, insbesondere die im Motorraum sehr stark belastenden Temperatur- und anderen äußeren Einflüsse wie Staub, Öl, Wasser und dergleichen geschützt.

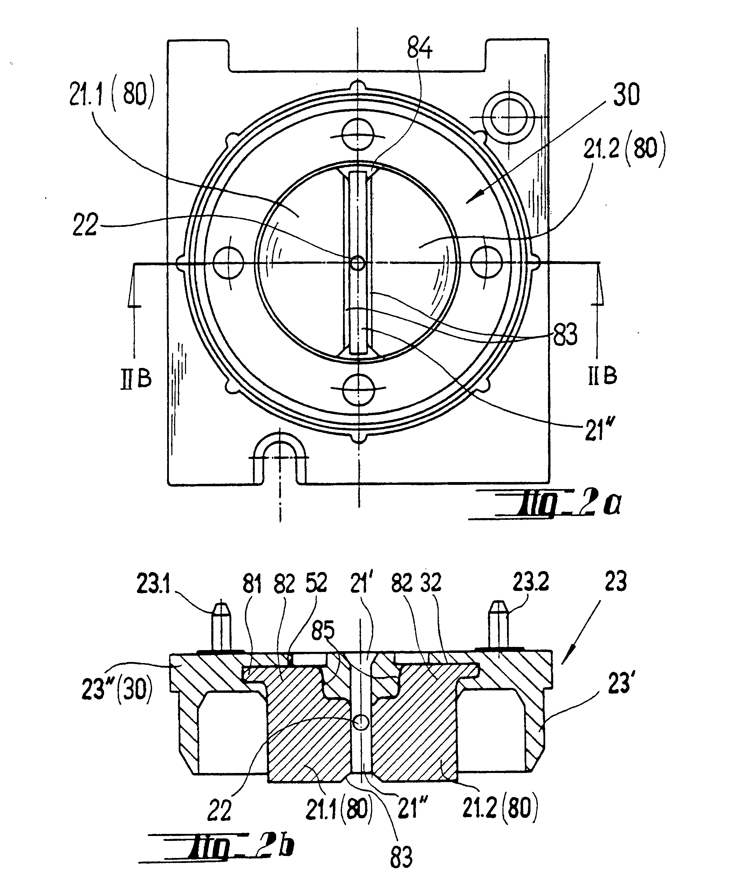

In den Fig. 2a und 2b ist eine erste Ausführungsform der stationären Einheit 20 des beschriebenen Drehwinkelsensors 2 gezeigt. Bei ihr sind die Statorteilelemente 21.1 und 21.2 jeweils als Sinter-Statorkörper 80 geformt. Hierbei werden die Sinter-Statorkörper 80 einzeln aus ferritischem Material im Metallspritzverfahren in einem Werkzeug gespritzt und anschließend in einem Ofen gesintert. Dadurch, daß für die Statorteilelemente 21.1 und 21.2 gleich ausgebildete Sinter-Statorkörper 80 verwendet werden können, können diese im Taktverfahren einzeln und danach chargenweise in einem Sinterofen gesintert werden. Jeder der so hergestellten Sinter-Statorkörper 80 weist einen Haltefuß 82, der in eine Sinterhaltekappe 81 übergeht, und eine Fußstufe 85 auf.

Der Sinter-Statorkörper 80 weist nicht nur, wie bereits eingangs erwähnt, zwei sich gegenüberliegende Querkantenphasen 84, sondern eine mit 83 bezeichnete Längskantenphase 83 auf, die gleichfalls einen Winkel von 45° hat.

Zwei solcher Sinter-Statorkörper 80 werden so ein einem Werkzeug gehalten, daß sie zwischen ihnen die Abstandsausnehmung 21" frei bleibt. Danach werden sie durch ein Ausspritzen des Gefäßelementes 23 aus Kunststoff im Bodenteil 23" als Grundplattenelement 50 gehalten. Im Bodenteil 23" werden so Halteausnehmungen 52 ausgebildet, die die Haltefüße 82 aufnehmen. Die Sinterhaltekappen 81 werden darüber hinaus im Bodenteil gehalten. Beim Formungsprozeß des Gefäaßelementes 23 werden die beiden Statorteilelemente 21.1 und 21.2 vom Wandteil 23' umgeben. An das Bodenteil 23" können zugleich Befestigungselemente 23.1, 23.2 angeformt sowie eine Zentralausnehmung 21' eingeformt werden.

Der besondere Vorteil der so ausgebildeten stationären Einheit 20 besteht darin, daß in einem weiteren Formungsprozeß zugleich das Gefäßelement 23 und die Halterung und Arretierung der Statorteilelemente 21.1 und 21.2 als Sinter-Statorkörper 80 vorgenommen wird. Hierdurch können die Fertigungskosten wesentlich gesenkt werden. Darüber hinaus läßt sich die Höhe der stationären Einheit 20 minimieren.

Ein weiterer Vorteil besteht darin, daß das Hall-Element 22 im Bereich der parallel gegenüberliegenden Flächen der Sinter-Statorkörper 80 im Bereich des stärksten magnetischen Flusses angeordnet sind. Die Längskantenphasen 83 sorgen für eine Konzentrierung des magnetischen Flusses. Der sich zwischen den gegenüberliegenden Fußstegen 83 im Bereich der Abschnittsausnehmung 21" ergebende vergrößerte Abstand zwischen beiden Sinter-Statorkörpern 80 hält den magnetischen Fluß an dieser Stelle klein. Die Querkantenphasen vergleichmäßigen den Fluß an den apfelsinenförmig ausgebildeten Statorteilelementen durch die Beseitigung deren Ecken.

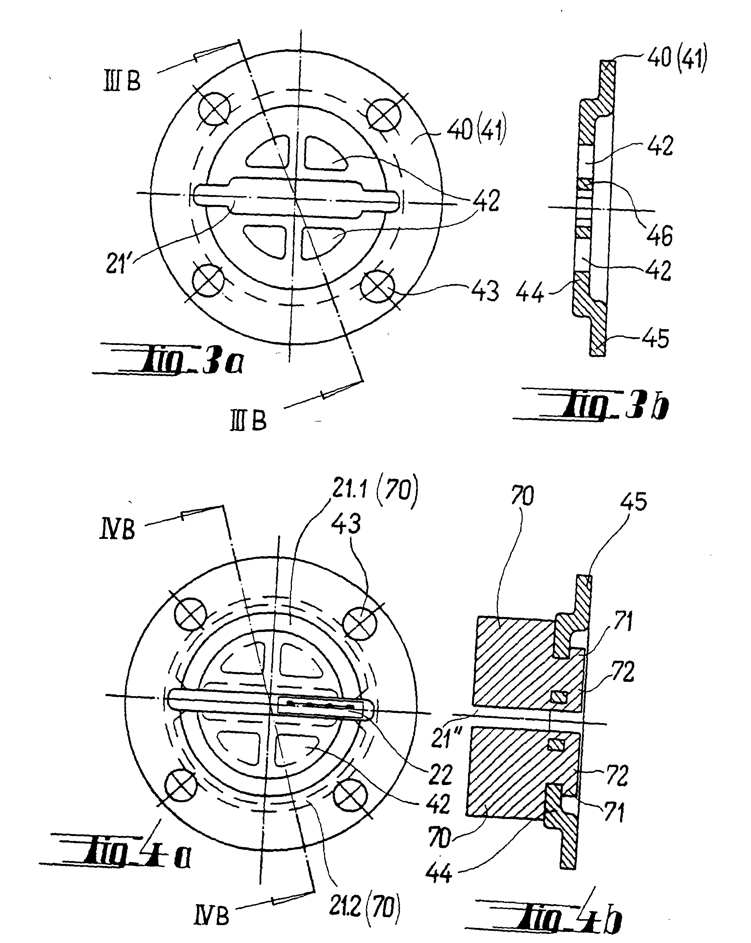

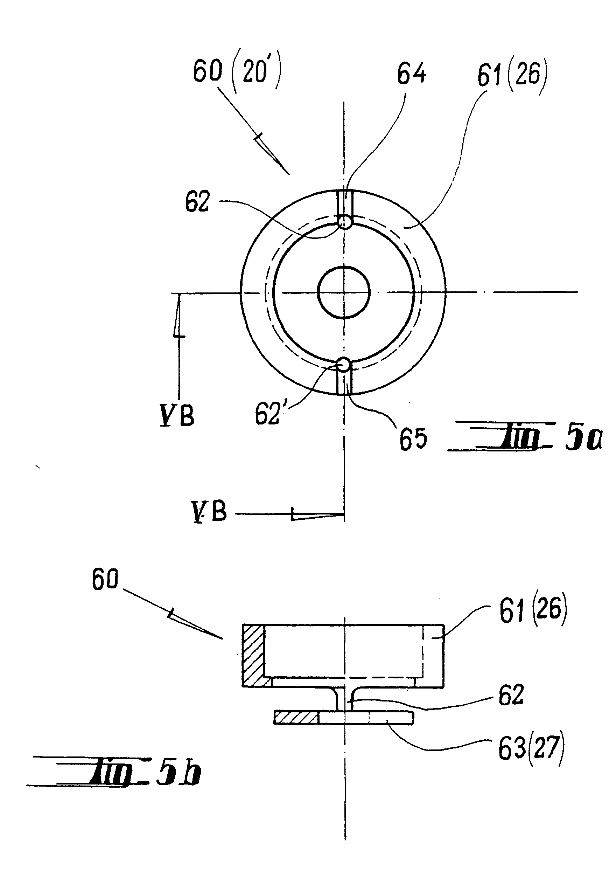

In den Fig. 3a, 3b, 4a und 4b ist eine zweite Ausführungsform einer stationären Einheit 20 dargestellt.

Sie besteht aus einer Statorgrundplatte 40, die aus Aluminium gesintert geformt ist. Sie besteht aus einem Haltescheibenkörper 44, der in einen Befestigungsringkörper 45 übergeht. In den Haltescheibenkörper 44 ist die Zentralausnehmung 21' eingebracht, die verjüngte Endformen aufweist. Der Zentralausnehmung 21' liegen jeweils zwei Halteausnehmungen 42 gegenüber. Die Halteausnehmungen haben die Form einer geteilten Apfelsinenscheibe. Sie werden zur Zentralausnehmung 21' durch einen Ausnehmungssteg 46 begrenzt. Im Befestigungsringkörper 45 sind sich gegenüberliegend jeweils zwei Befestigungsausnehmungen 43 eingebracht. Die Befestigungsausnehmungen 43 sind als runde Bohrungen ausgeführt.

In die so ausgebildete Statorgrundplatte 40 werden auf dessen Haltescheibenkörper 44 sich gegenüberliegend die Stator-teilelemente 21.1 und 21.2 als Sinter-Statorkörper 70 aus einem ferritischen Material eingesintert. Beim Formen des Sinter-Statorkörpers 70 im bereits beschriebenen Sinterverfahren wird zugleich ein Sinterhaltefuß 72 mit ausgebildet, der jeweils die Befestigungsausnehmung 42 durchdringt und den Ausnehmungssteg 46 mit einschließt. Einseitig geht der Sinterhaltefuß 72 in eine Sinterhaltekappe 71 über. Hierdurch wird der Sinter-Statorkörper fest in der Aluminiumgrundplatte 41 verankert und auf ihr festgehalten. Die zwischen den Sinter-Statorkörpern sich ausbildende Zentralausnehmung 21' weist die gleiche Breite auf, wie die Verlängerungen der Zentralausnehmung 21', die in der Aluminiumgrundplatte 41 angeordnet sind.

Die zweite Ausführungsform zeichnet sich durch eine hohe Festigkeit aus. Die gesinterte Grundplatte 40 hält die gesinterten Sinter-Statorkörper 70 so fest, daß sie allen statischen und dynamischen Kräften standhalten. Abschließend wird die Statorgrundplatte 40 in ein vorbereitetes Gefäßelement 23 eingesetzt. Das Gefäßelement kann dabei, wie bereits beschrieben oder in einer anderen Form hergestellt werden.

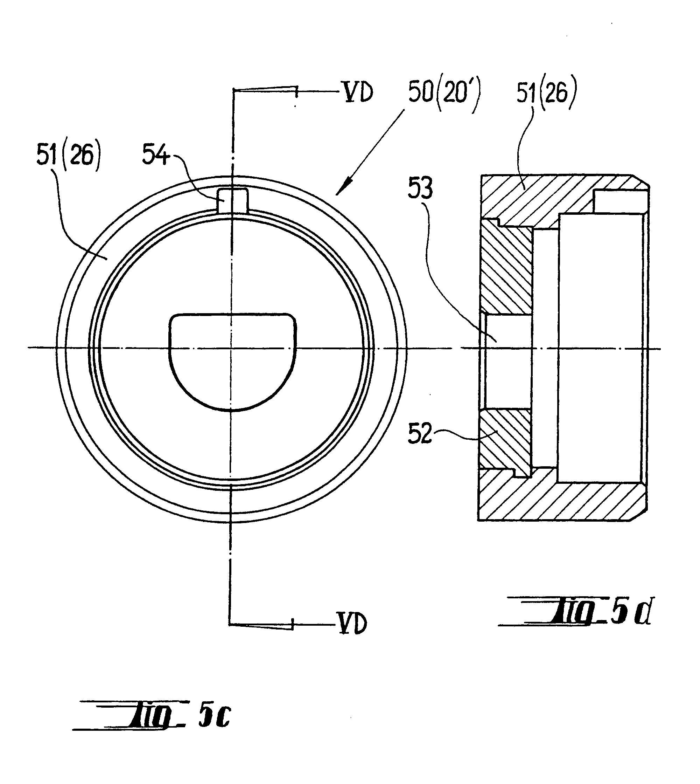

Eine erste Ausführungsform der Magnethalterungseinheit 26, 27 ist als ein pokalförmiger MIM-Haltestielbecher 60 in den Fig. 5a und 5b dargestellt.

Der MIM-Haltestielbecher 60 besteht aus
- einem scheibenförmigen Fuß 63, an dessen Rand sich
- zwei Stiele 62, 62' erheben, die dann in
- einen Becherkörper 61 übergehen.

Im Becherkörper 61 sind sich gegenüberliegende Spaltausnehmungen 64 und 65 angeordnet.

Erfindungswesentlich ist, daß dieser MIM-Haltestielkörper 60 aus einem X12CrMo17Si Stahl als magnetisch leitendes Material im Metal-Injektion-Molding-(MIM)-Verfahren geformt wird. Hierzu wird der nicht rostende X12CrMo17Si Stahl in eine Form eingespritzt. Der so im Spritzverfahren ausgeformte Roh-Haltestielbecher wird in einem Ofen erhitzt, ähnlich wie gesintert. Beim MIM-Verfahren reduziert sich das Volumen des Roh-Haltestielbechers um etwa 30 % und erhält damit seine endgültige Form als MIM-Haltestielkörper 60.

Der Becherkörper 61 ist hierbei das Magnethalterungselement 26 und der Fuß 63 das Distanzscheibenelement 27. Die Stiele 62, 62' verbinden das Magnethalterungselement 26 und das Distanzscheibenelement 27 und isolieren sie wenigstens größtenteils magnetisch gegeneinander.

Eine weitere Ausführungsform einer Magnethalterungseinheit, die als MIM-Haltebecher 50 ausgebildet ist, ist in den Fig. 5c und 5d dargestellt.

Der Sinterhaltebecher 50 besteht aus
- einem scheibenförmig ausgebildeten Becherbodenkörper 52 und
- einem ihn umgebenden Becherhohlzylinderkörper 51.

In dem Becherbodenkörper 52 ist eine Steckausnehmung 53 und in den Becherhohlzylinderkörper 51 eine Spaltausnehmung 54 eingebracht.

Der MIM-Haltebecher 50 wird im Zwei-Komponenten-Verfahren hergestellt und zwar im MIM-Verfahren. Zuerst wird der Bodenbecherkörper 52 in einer Spritzform aus einem Pulver aus X2CrNi1911 Stahl als magnetisch nicht leitendem Material gemischt mit Zusätzen wie Wachs und dergleichen geformt. Anschließend wird in einem zweiten Spritzgang um diesen Roh-Becherbodenkörper ein Roh-Becherhohlzylinderkörper aus einem Pulver aus einem X12CrNiS17 Stahl ebenfalls gemischt mit Zusätzen wie Wachs und dergleichen in einer weiteren Form gespritzt.

Danach wird der so geformte Roh-MIM-Haltebecher wenigstens teilweise in einem Waschgang von seinen Zusätzen, insbesondere dem Wachs befreit und in einem Ofen zum MIM-Haltebecher 50 auf dessen geforderte Maße bei etwa 1000° "gebacken", ähnlich wie gesintert, wobei sich sein Volumen und seine Abmaße gegenüber dem Roh-Haltebecher um etwa 30 % reduzieren.

Das MIM-Verfahren an sich ist bekannt, nicht aber seine Verwendung für die Herstellung der beiden Ausführungsformen der Magnethalteeinheit.

Wie bereits eingangs anhand der Fig. 1 erläutert, weist der Drehwinkelsensor 2 die gegenüber der stationären Einheit 20 rotierende Einheit 20' das Magnetelement 24 auf, das ringförmig ausgebildet ist.

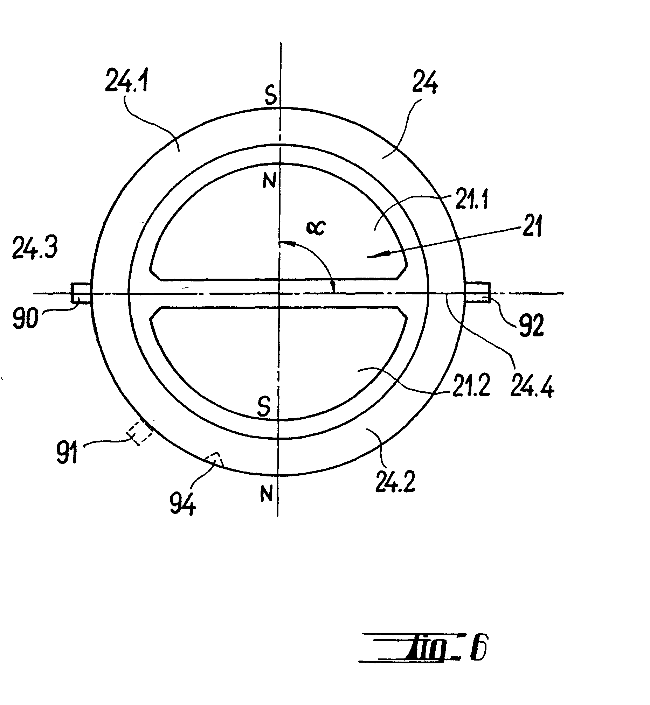

Wie Fig. 6 zeigt, sind an dem Magnetelement 24, das aus einem Nord-Süd-Halbring 24.1 und einem Süd-Nord-Halbring 24.2 besteht, sich gegenüberliegend Stegelemente 90 und 92 angeordnet. Der eine Halbring hat innen umgreifend einen Nord- und außen umgreifend eine Süd-Polung. Der zweite Halbring hat außen umgreifend einen Nord- und innen umgreifend einen Süd-Pol. Hierdurch entsteht ein zweipolig-radiales Ringmagnetelement, das sich wie ein Stabmagnet verhält. Der Magnetfluß verläuft in dem Mit N und S bezeichneten Bereichen radial. Lediglich an mit 24.3 und 24.4 bezeichneten Schnittstellen sind Feld-Ungleichmäßigkeiten vorhanden. Hier sind an den Schnittstellen 24.3 und 24.4 und so im magnetisch "neutralen" Bereich des Elements 24 die Stegelemente positioniert. Es kann aber auch nur ein Stegelement 90 oder auch weitere, die mit 91 bezeichnet sind, an anderer Stelle angeordnet werden, wie Fig. 6 auch zeigt. Die Stegelemente können eine viereckige, eine dreieckige oder eine andere geometrische Form haben. Desweiteren kann in das Magnetelement 24 eine Spaltausnehmung 94 angebracht werden.

Das zweipoligradiale Magnetelement 24 muß gegenüber zwei sich gegenüberliegenden Statorteilelemente 21.1 und 21.2 des Statorelements 21, die, wie bereits beschrieben, als lagegenau gehalten Sinter-Statorkörper 70 bzw. 80 ausgebildet sind, in einen bestimmten Winkel α, der in der Zeichnung mit 90° angegeben ist, gegenüber der Abstandsausnehmung 21 positioniert werden.

Mit Hilfe eines Stegelements wird das Magnetelement 24 in der Spaltausnehmung 54 des MIM-Haltebechers 50 zur Realisierung des Winkels α festgelegt.

Mit Hilfe zweier sich gegenüberliegender Stegelemente 90,92 wird das Magnetelement 24 in den Spaltausnehmungen 64 und 65 zur Realisierung des einzuhaltenden Winkels α positioniert.

Hervorzuheben ist, daß mit Hilfe der Stegelemente und der dazu kompatiblen Spaltausnehmungen eine einfache und äußerst genaue Einstellung des Magnetelementes 24 möglich ist. Umständliche Nachjustierungen sind nicht mehr erforderlich. Wesentlich ist, daß das Magnetelement 24 verdrehungssicher in dem Becherhohlzylinderkörper 52 bzw. Becherkörper 51 gehalten wird. Auch stärkste, ruckartige Kraftmomente vermögen es nicht zu verstellen und herauszulösen.

## Patentansprüche

1. Drehwinkelsensor, der aufweist
- eine stationäre Einheit (20), die ein Statorelement (21) enthält, das in einem Gefäßelement (23) mit wenigstens einem Bodenteil (23") angeordnet ist, wobei das Statorelement (21) aus zwei Statorteilelementen (21.1, 21.2) aus einem ferrittischen Material besteht, die zwischen sich eine Abstandsausnehmung (21") freilassen, und wobei die Statorteilemente (21.1, 21.2) mit wenigstens einer um 45° geneigten Phase (83, 84) versehen sind und
- eine rotierende Einheit (20'), die ein ringförmig ausgebildetes Magnetelement (24) aufweist, das in einer Magnethalterungseinheit (26, 27) gehalten ist, wobei das Magnetelement (24) unter Belassung eines Luftspaltes (25) um die Statorteilelemente (21.1, 21.2) bewegbar ist,
dadurch gekennzeichnet,
- daß die aus ferritischem Material bestehenden Stator-teilelemente (21.1, 21.2) in einem Sinterverfahren hergestellte Sinter-Statorkörper (70; 80) mit wenigstens einem Halteelement (71, 72; 81, 82) sind, die in einer Halteausnehmung (32; 42) eines Grundplattenelementes (30; 40) aus einem nichtmagnetisierbaren Material gehalten sind,
- daß die Magnethalterungseinheit (26, 27) ein mit einer wenigstens teilweise ausgebildeten Magneto-Isolierzone (52; 62, 62') in einem Metal-Injektion-Molding-(MIM)-Verfahren hergestellter MIM-Haltekörper (50; 60) mit wenigstens einer Ausnehmung (54; 64, 65) ist und
- daß mit wenigstens einer Spaltausnehmung (54; 64, 65; 94) und wenigstens einem dazu kompatiblen Stegelement (90, 91, 92) das ringförmige Magnetelement (24) in dem MIM-Haltekörper (50; 60) festgelegt und in einen bestimmten Winkel (α) gegenüber der Abstandsausnehmung (21'') positioniert ist.

2. Drehwinkelsensor nach Anspruch 1, dadurch gekennzeichnet, daß die Halteelemente als Sinterhaltebolzen und/ oder Sinterhaltefüße (72; 82) ausgebildet sind, die jeweils in eine Sinterhaltekappe (71; 81) übergehen.

3. Drehwinkelsensor nach Anspruch 1 oder 2, dadurch gekennzeichnet, daß das Grundplattenelement eine Statorgrundplatte (30; 40) mit wenigstens einer Halteausnehmung (32; 42) ist.

4. Drehwinkelsensor nach einem der Ansprüche 1 bis 3, dadurch gekennzeichnet, daß eine erste Statorgrundplatte (30) das Bodenteil (23") des Gefäßelements (23) mit ersten Halteausnehmungen (32) ist, in dem eingeformt erste Sinter-Statorkörper (80) mit ihrem Sinterhaltefuß (82) und ihrer Sinterkappe gehalten sind.

5. Drehwinkelsensor nach einem der Ansprüche 1 bis 3, dadurch gekennzeichnet, daß eine zweite Statorgrundplatte (40) einen kreisrunden Haltescheibenkörper (44) mit wenigstens einer zweiten Halteausnehmung (42) aufweist, der wenigstens teilweise von einem Befestigungskörper (45) mit wenigstens einer Befestigungsausnehmung (43) umgeben ist,
wobei der zweite Sinter-Statorkörper (70) mit der zweiten Stator-Grundplatte (40) so verbunden sind,
daß diese auf dem Haltescheibenkörper (44) wenigstens teilweise aufliegen,
daß deren Sinterhaltefüße (72) in den zweiten Halteausnehmungen (42) angeordnet sind und
daß die Sinterkappen (71) unter dem Haltescheibenkörper (44) wenigstens teilweise festgelegt sind.

6. Drehwinkelsensor nach einem der Ansprüche 1 bis 4, dadurch gekennzeichnet, daß wenigstens der Haltescheibenkörper (44) wenigstens teilweise vom Bodenteil (23") des Gefäßelementes (23) umschlossen ist.

7. Drehwinkelsensor nach einem der Ansprüche 1 bis 6, dadurch gekennzeichnet, daß die zweiten Halteausnehmungen (42) und die Befestigungsausnehmungen (43) rund und/oder apfelsinenscheibenförmig ausgebildet sind.

8. Drehwinkelsensor nach Anspruch 5, dadurch gekennzeichnet, daß die zweite Statorgrundplatte (40) aus Aluminium, Kupfer oder Kunststoff besteht.

9. Drehwinkelsensor nach einem der Ansprüche 1 bis 8, dadurch gekennzeichnet, daß das Gefäßelement (23) mit seinem Bodenteil (23") aus einem formbaren Kunststoff, vorzugsweise gespritzem Kunststoff, hergestellt sind.

10. Drehwinkelsensor nach Anspruch 1, dadurch gekennzeichnet, daß der MIM-Haltekörper ein einteiliger aus dem magnetisch leitenden Material im Metal-Injektion-Molding (MIM)-Verfahren hergestellter pokalförmig ausgebildeter MIM-Halterstielbecher (60) ist, der aus
- einem im wesentlichen scheibenförmigen Fuß (63),
- wenigstens zwei sich an einem Rand des Fußes (63) erhebenden, vorzugsweise zylindrisch ausgebildeten Stielen (62, 62') als Magneto-Isolierzone und
- einem im wesentlichen hohlzylinderförmig ausgebildeten Becherkörper (61), der von den Stielen (62, 62') gehalten ist,
besteht.

11. Drehwinkelsensor nach Anspruch 1, dadurch gekennzeichnet, daß der MIM-Haltekörper als ein im Zwei-Komponenten-Verfahren des Metal-Injektion-Molding-(MIM)-Verfahrens hergestellter, im wesentlichen hohlzylinderfõrmig ausgebildeter MIM-Haltekörper (50) geformt ist, der aus
- einem im wesentlichen scheibenförmigen Becherbodenkörper (52) aus einem magnetisch nicht leitenden Material als Magneto-Isolierzone und
- einem im wesentlichen hohlzylinderförmigen Becherhohlzylinderkörper (51) aus einem magnetisch leitenden Material, der um den Becherbodenkörper (52) gelegt ist und ihn einseitig verschließt,
besteht.

12. Drehwinkelsensor nach Anspruch 1 und 10 bis 11, dadurch gekennzeichnet, daß der Becherkörper (61) und der Becherhohlzylinderkörper (51) mit wenigstens einer Spaltausnehmung (54, 64, 65) versehen ist.

13. Drehwinkelsensor nach Anspruch 1, dadurch gekennzeichnet, daß das Magnetelement (24) mit wenigstens einem Stegelement (90, 91, 92) versehen ist, das in einem der Spaltausnehmungen (54, 64, 55) des Becherhohlzylinder- oder Becherkörpers (51; 61) eingreift.

14. Drehwinkelsensor nach Anspruch 13, dadurch gekennzeichnet, daß das(ie) Stegelement(e) (90, 91, 92) an wenigstens einer der sich gegenüberliegenden Schnittstellen (24.3, 24.4) des aus einem Süd-Nord- und einem Nord-Süd-Halbring (24.1, 24.2) bestehenden Magnetelement (24) angeordnet ist (sind).

15. Drehwinkelsensor nach einem der Ansprüche 1 bis 14, dadurch gekennzeichnet, daß die Stegelemente (90, 91, 92) aus dem gleichen Material wie das Magnetelement (24), des Becherhohlzylinder- oder Becherkörpers (51, 61) und/oder aus einem Kunststoff ausgebildet ist.

16. Drehwinkelsensor nach Anspruch 11, 13 und 15, dadurch gekennzeichnet, daß das magnetisch leitende Material für den Becherhohlzylinderkörper (51) ein Ferrit, das wenigstens Chrom und Nickel enthält, insbesondere ein X12CrNiS17-Stahl ist.

17. Drehwinkelsensor nach Anspruch 11, dadurch gekennzeichnet, daß das magnetisch nicht leitende Material für den Becherbodenkörper (52) ein Ferrit, das wenigstens Chrom und Nickel enthält, insbesondere ein X2CrNi1911 Stahl ist.

## Claims

1. An angle of rotation sensor comprising
- a stationary unit (20) containing a stator element (21) disposed in a vessel element (23) having at least one bottom part (23"),
wherein the stator element (21)is made up of two stator component elements (21.1, 21.2) of ferritic material, leaving a spacing recess (21") between them, and
wherein the stator component elements (21.1, 21.2) are provided with at least one phase (83, 84) inclined at 45°, and
- a rotating unit (20') comprising an annular magnet element (24) held in a magnet-retaining unit (26, 27),
wherein the magnet element (24) is movable around the stator component elements (21.1, 21.2) leaving an air gap (25),
characterised in that
- the stator component elements (21.1, 21.2) made of ferritic material are sintered stator members (70; 80) produced by a sintering method and comprising at least one retaining element (71, 72; 81, 82) held in a retaining recess (32; 42) in a baseplate element (30; 40) made of a non-magnetisable material,
- the magnet retaining unit (26, 27) is an MIM retaining member (50; 60) made by a metal injection moulding (MIM) method and having an at least partly formed magnetism-insulating zone (52; 62, 62') and formed with at least one recess (54; 64, 65) and
- has at least one gap or recess (54; 64, 65; 94) and at least one web element (90, 91, 92) compatible therewith which secure the annular magnet element (24) in the MIM retaining member (50; 60) and position it at a given angle (α) to the spacing recess (21").

2. An angle of rotation sensor according to claim 1, characterised in that the retaining elements are in the form of sintered retaining bolts and/or sintered retaining feet (72; 82) which merge into a respective sintered retaining cap (71; 81).

3. An angle of rotation sensor according to claim 1 or 2, characterised in that the baseplate element is a stator baseplate (30; 40) with at least one retaining recess (32; 42).

4. An angle of rotation sensor according to any of claims 1 to 3, characterised in that a first stator baseplate (30) is the bottom part (23") of the vessel element (23) having first retaining recesses (32) and holding moulded first sintered stator members (80) via the sintered retaining foot (82) and sintered cap thereof.

5. An angle of rotation sensor according to any of claims 1 to 3, characterised in that a second stator baseplate (40) has a circular retaining disc member (44) with at least one second retaining recess (42) and at least partly surrounded by a securing member (45) having at least one securing recess (43),
wherein the second sintered stator member (70) is so connected to the second stator baseplate (40)
that these components rest at least partly on the retaining disc member (44),
their sintered retaining feet (72) are disposed in the second retaining recesses (42) and
the sintered caps (71) are at least partly secured under the retaining disc member (44).

6. An angle of rotation sensor according to any of claims 1 to 4, characterised in that at least the retaining disc member (44) is at least partly surrounded by the bottom part (23") of the vessel element (23).

7. An angle of rotation sensor according to any of claims 1 to 6, characterised in that the second retaining recesses (42) and the securing recesses (43) are round and/or orange slice-shaped.

8. An angle of rotation sensor according to claim 5, characterised in that the second stator baseplate (40) is of aluminium, copper or plastic.

9. An angle of rotation sensor according to any of claims 1 to 8, characterised in that the bottom part (23") of the vessel element (23) is made of a mouldable plastic, preferably injected plastic.

10. An angle of rotation sensor according to claim 1, characterised in that the MIM retaining member is a one-part cup-shaped MIM retaining stemmed cup (60) made of the magnetism-conducting material by the metal-injection moulding (MIM) process and comprising
- a basically disc-shaped foot (63),
- at least two magnetism-insulating zones in the form of stems (62, 62') preferably cylindrical and rising from an edge of the foot (63), and
- a substantially hollow cylindrical cup member (61) held by the stems (62, 62').

11. An angle of rotation sensor according to claim 1, characterised in that the MIM retaining member is a substantially hollow cylindrical MIM retaining member (50) produced in the two-component version of the metal-injection moulding (MIM) process and comprising
- a substantially disc-shaped cup bottom member (52) of a magnetically non-conducting material constituting a magnetism-insulating zone and
- a substantially hollow cylindrical hollow cylindrical cup member (51) made of a magnetically conducting material placed round the cup base member (52) and closing it on one side.

12. An angle of rotation sensor according to claim 1 and claims 10 to 11, characterised in that the cup member (61) and the hollow cylindrical cup member (51) are formed with at least one gap or recess (54, 64, 65).

13. An angle of rotation sensor according to claim 1, characterised in that the magnet element (24) comprises at least one web element (90, 91, 92) which engages in one of the gaps or recesses (54, 64, 55) in the hollow cylindrical cup member (51) or the cup member (61).

14. An angle of rotation sensor according to claim 13, characterised in that the web element or elements (90, 91, 92) are disposed at at least one of the opposite interfaces (24.3, 24.4) of the magnet element (24) comprising a south-north and a north-south half-ring (24.1, 24.2).

15. An angle of rotation sensor according to any of claims 1 to 14, characterised in that the web elements (90, 91, 92) are made of the same material as the magnet element (24), of the hollow cylindrical cup member (51) or the cup member (61), and/or of a plastic.

16. An angle of rotation sensor according to claim 11, 13 or 15, characterised in that the magnetism-conducting material for the hollow cylindrical cup member (51) is a ferrite containing at least chromium and nickel, particularly an X12CrNiS17 steel.

17. An angle of rotation sensor according to claim 11, characterised in that the magnetism non-conducting material for the cup base member (52) is a ferrite containing at least chromium and nickel, particularly an X2CrNi1911 steel.

## Revendications

1. Détecteur d'angle de rotation qui inclut:
- une unité stationnaire (20) qui contient un élément de stator (21) qui est agencé dans un élément (23) en forme de récipient comportant au moins une partie de fond (23"),
dans laquelle l'élément de stator (21) se compose de deux éléments partiels (21.1, 21.2) de stator en matière ferritique, qui ménagent entre eux un évidement d'espacement (21"), et
dans laquelle les éléments partiels (21.1, 21.2) du stator comportent au moins une phase (83, 84) inclinée à 45° et
- une unité rotative (20') qui inclut un élément aimanté (24) de configuration annulaire qui est tenu dans une unité de support (26, 27) d'aimant, l'élément aimanté (24) étant mobile autour des éléments partiels du stator (21.1, 21.2) en ménageant un entrefer (25),
caractérisé en ce que
- les éléments partiels (21.1, 21.2) du stator en matière ferritique sont des corps frittés (70; 80) de stator fabriqués dans un processus de frittage qui incluent au moins un élément de maintien (71, 72; 81, 82) et qui sont tenus dans un évidement de maintien (32; 42) d'un élément de plaque de base (30; 40) en matière non magnétisable,
- l'unité de support (26, 27) d'aimant est un corps de maintien (50; 60) coulé par injection de métal (MIM selon les initiales du terme anglo-saxon metal injection molding) qui est fabriqué par un procédé de MIM, inclut au moins une zone d'isolation magnétique (52; 62, 62') configurée au moins partiellement et comporte au moins un évidemment (54; 64, 65);
- l'élément aimanté annulaire (24) est fixé dans le corps de maintien coulé par injection de métal (50; 60) au moyen d'au moins un évidement d'espacement (54; 64, 65; 94) et d'au moins un élément en forme de barreau (90, 91, 92) compatible avec ce dernier et est positionné, selon un angle (α) déterminé, par rapport à l'évidement d'espacement (21").

2. Détecteur d'angle de rotation selon la revendication 1, caractérisé en ce que les éléments de maintien consistent en boulons frittés de maintien et/ou en pattes frittées de maintien (72; 82) qui se raccordent respectivement dans une couronne frittée de maintien (71; 81).

3. Détecteur d'angle de rotation selon la revendication 1 ou 2, caractérisé en ce que l'élément de plaque de base est une plaque de base (30; 40) de stator comportant au moins un évidement de maintien (32; 42).

4. Détecteur d'angle de rotation selon l'une quelconque des revendications 1 à 3, caractérisé en ce qu'une première plaque de base (30) de stator est la partie de fond (23") de l'élément (23) en forme de récipient à premiers évidements de maintien (32), dans laquelle des premiers corps frittés (80) de stator conformés sont tenus par leur patte frittée de maintien (82) et par leur couronne frittée.

5. Détecteur d'angle de rotation selon l'une quelconque des revendications 1 à 3, caractérisé en ce qu'une deuxième plaque de base (40) de stator comprend un corps discoïdal circulaire de maintien (44) qui comporte au moins un deuxième évidement de maintien (42) et est entouré au moins en partie par un corps de fixation (45) comportant au moins un évidement de fixation (43),
le deuxième corps fritté (70) de stator étant connecté à la deuxième plaque de base (40) de stator d'une manière telle que
ceux-ci reposent au moins en partie sur le corps discoïdal de maintien (44), que
leurs pattes frittées de maintien (72) sont agencées dans les deuxièmes évidements de maintien (42), et que
les couronnes frittées (71) sont fixées au moins en partie sous le corps discoïdal de maintien (44).

6. Détecteur d'angle de rotation selon l'une quelconque des revendications 1 à 4, caractérisé en ce qu'au moins le corps discoïdal de maintien (44) est entouré au moins en partie par la partie de fond (23") de l'élément (23) en forme de récipient.

7. Détecteur d'angle de rotation selon l'une quelconque des revendications 1 à 6, caractérisé en ce que les deuxièmes évidements de maintien (42) et les évidements de fixation (43) sont d'une forme ronde et/ou en forme de quartiers d'orange.

8. Détecteur d'angle de rotation selon la revendication 5, caractérisé en ce que la deuxième plaque de base (40) de stator est en aluminium, en cuivre ou en matière plastique.

9. Détecteur d'angle de rotation selon l'une quelconque des revendications 1 à 8, caractérisé en ce que l'élément (23) en forme de récipient est fabriqué d'une façon telle que sa partie de fond (23") est en matière plastique apte à la coulée, de préférence en matière plastique coulée par injection.

10. Détecteur d'angle de rotation selon la revendication 1, caractérisé en ce que le corps de maintien coulé par injection de métal est un godet de maintien (60) en forme de verre à pied à colonnettes, coulé d'un seul tenant en matière magnétiquement conductrice par injection de métal par le procédé de coulée par injection de métal ou procédé de MIM, qui se compose
- d'un pied sensiblement en forme de disque (63),
- d'au moins deux colonnettes (62, 62'), de forme cylindrique de préférence, dressées chacune à un bord du pied (63), intervenant comme zone d'isolation magnétique et
- d'un corps (61) de godet de configuration sensiblement cylindrique creuse qui est tenu par les colonnettes (62, 62').

11. Détecteur d'angle de rotation selon la revendication 1, caractérisé en ce que le corps de maintien coulé par injection de métal (MIM), est coulé sous la forme d'un corps de maintien coulé par injection de métal (50) de configuration sensiblement cylindrique creuse, fabriqué par un procédé à deux composants du procédé de coulée par injection de métal, qui se compose
- d'un corps de fond (52) de godet sensiblement discoïdal en matière magnétiquement non-conductrice intervenant comme zone magnétiquement isolante, et
- d'un corps cylindrique creux (51) de godet de forme sensiblement cylindrique creuse en matière magnétiquement conductrice qui est agencé autour du corps de fond (52) de godet et le ferme sur l'un de ses côtés.

12. Détecteur d'angle de rotation selon la revendication 1 et la revendication 10 ou 11, caractérisé en ce que le corps (61) de godet ou le corps cylindrique creux (51) de godet comporte au moins un évidement en forme de fente (54, 64, 65).

13. Détecteur d'angle de rotation selon la revendication 1, caractérisé en ce que l'élément aimanté (24) comporte au moins un élément en forme de barreau (90, 91, 92) qui pénètre dans l'un des évidements (54, 64, 65) en forme de fentes du corps cylindrique creux de godet ou du corps de godet (51; 61).

14. Détecteur d'angle de rotation selon la revendication 13, caractérisé en ce que l'élément ou les éléments en forme de barreau (90, 91, 92) est ou sont agencé(s) sur au moins l'une des interfaces opposées (24.3, 24.4) de l'élément aimanté (24) qui se compose d'une demie bague sud nord et d'une demie bague nord sud (24.1, 24.2).

15. Détecteur d'angle de rotation selon l'une quelconque des revendications 1 à 14, caractérisé en ce que les éléments en forme de barreau (90, 91, 92) consistent en la même matière que l'élément aimanté (24), le corps cylindrique creux de godet ou le corps de godet (51, 61) et/ou en matière plastique.

16. Détecteur d'angle de rotation selon les revendications 11, 13 et 15, caractérisé en ce que la matière magnétiquement conductrice pour le corps cylindrique creux (51) en forme de godet est une ferrite qui contient au moins du chrome et du nickel, en particulier un acier X12CrNiS17.

17. Détecteur d'angle de rotation selon la revendication 11, caractérisé en ce que la matière magnétiquement non-conductrice pour le corps de fond (52) de godet est une ferrite qui contient au moins du chrome et du nickel, par exemple un acier X2CrNi1911.
